# EUROPÄISCHE PATENTSCHRIFT

(11) **EP 2 536 877 B1**
(45) Veröffentlichungstag und Bekanntmachung des Hinweises auf die Patenterteilung: **17.09.2014**
(21) Anmeldenummer: 11702039.6
(22) Anmeldetag: 02.02.2011
(51) Int. Cl.: D06F 58/24, A47L 15/48, B01D 53/26

(54) **TROCKNER MIT ADSORBEREINHEIT SOWIE VERFAHREN ZU SEINEM BETRIEB**
DRYER WITH ADSORBER UNIT, AND METHOD FOR OPERATING IT
SECHE-LINGE COMPRENANT UNE UNITE D'ADSORPTION ET PROCEDE POUR FAIRE FONCTIONNER CE SECHE-LINGE

(30) Priorität: 18.02.2010 DE 102010002086
(43) Veröffentlichungstag der Anmeldung: 26.12.2012
(73) Patentinhaber: BSH Bosch und Siemens Hausgeräte GmbH, 81739 München (DE)
(72) Erfinder: STOLZE, Andreas, 14612 Falkensee (DE)
(86) Internationale Anmeldenummer: PCT/EP2011/051471
(87) Internationale Veröffentlichungsnummer: WO 2011/101244

(56) Entgegenhaltungen:
- EP-A1- 1 500 739
- EP-A1- 2 246 470
- DE-A1- 10 356 785

## Beschreibung

Die Erfindung betrifft einen Trockner mit einer Trocknungskammer für zu trocknende Gegenstände, einem Prozessluftkanal, in dem sich eine Heizung zur Erwärmung der Prozessluft, eine Adsorbereinheit, eine Adsorberheizung, ein erster Wärmetauscher, ein Gebläse für die Beförderung der Prozessluft und eine Steuereinrichtung befinden, sowie ein Verfahren zu seinem Betrieb.

Die Erfindung betrifft insbesondere einen Trockner (reiner Trockner oder Waschtrockner), in dem ein Trocknungsverfahren durchgeführt werden kann, das eine wiederholte Adsorption und Desorption von Wasser in einer Adsorbereinheit beinhaltet.

Ein Trockner der eingangs definierten Gattung geht hervor aus der EP 1 500 739 A1.

In einem Trockner wird Luft (so genannte Prozessluft) durch ein Gebläse über eine Heizung in eine Trommel, die zu trocknende Wäschestücke enthält, als Trocknungskammer geleitet. Die heiße Luft nimmt Feuchtigkeit aus den zu trocknenden Wäschestücken auf.

In einem Ablufttrockner wird die feuchtwarme Prozessluft nach außen geleitet, beispielsweise in einen Aufstellraum. In einem Kondensationstrockner wird dagegen die feuchtwarme Prozessluft nach Durchgang durch die Trommel in einen Wärmetauscher geleitet, dem in der Regel ein Flusenfilter vorgeschaltet ist. In diesem Wärmetauscher (z.B. Luft-Luft-Wärmetauscher oder Wärmesenke einer Wärmepumpe) wird die feuchtwarme Prozessluft abgekühlt, so dass das in ihr enthaltene Wasser kondensiert. Das kondensierte Wasser (Kondensat) wird anschließend in der Regel in einem geeigneten Behälter gesammelt und die abgekühlte und getrocknete Luft erneut der Heizung und anschließend der Trommel zugeführt.

Auf diese Weise kann ein erhebliche Teil der zur Erwärmung der Prozessluft eingesetzten Energie zurückgewonnen werden. Es wird allerdings weiterhin nach Trocknern gesucht, mit denen mit einem möglichst geringen Energieaufwand feuchte Wäsche getrocknet werden kann. Eine Möglichkeit bietet die Verwendung eines Wasser reversibel aufnehmenden Materials, d.h. eines reversibel hydratisierbaren und dehydratisierbaren Materials.

Die DE 36 26 887 A1 beschreibt einen Trockner, der ein adsorptives Trocknungsmittel zur Entfeuchtung der Prozessluft und zur Nutzung der Wärmeenergie verwendet. Als Trocknungsmittel wird insbesondere ein Adsorbens der Matrix Aluminosilikat verwendet, welches überwiegend aus Siliciumdioxid mit einem geringen Anteil Aluminiumoxid besteht.

Die EP 0 777 998 A1 beschreibt ein Verfahren zur Energieeinsparung in Haushaltsgeräten und ein Gerät, insbesondere ein Trockner, mit verbessertem Energiewirkungsgrad. Das Haushaltsgerät weist eine feste Stoffverbindung auf, welche imstande ist, eine flüchtige Stoffverbindung zu adsorbieren und Wärme während der Adsorption der flüchtigen Stoffverbindung zu erzeugen, und die flüchtige Stoffverbindung zu desorbieren, wenn diese erwärmt wird. Es wird ein Trockner mit einem Adsorptionssystem umfassend einen Zeolithen zur Adsorption von Wasser beschrieben, das zur Regeneration eine elektrische Heizvorrichtung aufweist. Das Adsorptionssystem wird zyklisch betrieben, indem sich Adsorptions- und Desorptionsphasen mindestens einmal ablösen.

Die DE 10 2005 004 094 A1 beschreibt eine Geschirrspülmaschine mit einer Sorptionskolonne mit einem reversibel dehydratisierbaren Material.

Die DE 103 56 785 A1 beschreibt eine Geschirrspülmaschine mit einem Behälter mit einem verdampfbaren und/oder sublimierbaren Medium und einem Sorber mit reversibel hydratisierbarem Material, z.B. Zeolith. Im Sorber kann ein elektrisches Heizelement vorhanden sein, welches das reversibel hydratisierbare Material bei Bedarf zur Desorption erhitzt.

Die DE 103 56 786 A1 beschreibt ein Verfahren zum Trocknen in einem Haushaltsgerät, insbesondere einer Geschirrspülmaschine, mit folgenden Schritten:
- ein Medium, insbesondere Wasser, wird in einem Behälter verdampft und/oder sublimiert, wodurch sich das Medium abkühlt,
- der im Behälter erzeugte Dampf des Mediums wird von reversibel hydratisierbarem Material, insbesondere Zeolith, in einem Sorber aufgenommen und dadurch das reversibel hydratisierbare Material erwärmt,
- Luft aus einem Behandlungsraum wird zum abgekühlten Medium geleitet, wodurch die Luft abkühlt, um die Luft durch Kondensation der enthaltenen Feuchtigkeit zu entfeuchten,
- die abgekühlte und entfeuchtete Luft wird am reversibel hydratisierbaren Material erwärmt und wieder zurück in den Behandlungsraum geleitet.

Aufgabe der vorliegenden Erfindung war es vor diesem Hintergrund, einen Trockner mit einer Adsorbereinheit bereitzustellen, der einen verbesserten kontinuierlichen Betrieb ermöglicht. Aufgabe der Erfindung war es außerdem, ein Verfahren zu seinem Betrieb bereitzustellen.

Die Lösung dieser Aufgabe wird nach dieser Erfindung erreicht durch einen Trockner mit den Merkmalen des entsprechenden unabhängigen Patentanspruchs sowie das Verfahren des entsprechenden unabhängigen Patentanspruchs. Bevorzugte Ausführungsformen des erfindungsgemäßen Trockners sind in entsprechenden abhängigen Patentansprüchen aufgeführt. Bevorzugten Ausführungsformen des erfindungsgemäßen Trockners entsprechen bevorzugte Ausführungsformen des erfindungsgemäßen Verfahrens und umgekehrt, auch wenn dies hierin nicht explizit festgestellt ist.

Gegenstand der Erfindung ist somit ein Trockner mit einer Trocknungskammer für zu trocknende Gegenstände, einem Prozessluftkanal, in dem sich eine Heizung zur Erwärmung der Prozessluft, eine Adsorbereinheit, eine Adsorberheizung, ein erster Wärmetauscher, ein Gebläse für die Beförderung der Prozessluft und eine Steuereinrichtung befinden, wobei sich der Prozessluftkanal hinter der Trocknungskammer in einen Adsorberkanal, in dem sich die Adsorbereinheit und die Adsorberheizung befinden, und in mindestens einen Prozessluftteilkanal aufspaltet, und der erste Wärmetauscher den Adsorberkanal und den mindestens einen Prozessluftteilkanal umfasst, so dass Wärme zwischen dem Adsorberkanal und dem mindestens einen Prozessluftteilkanal ausgetauscht werden kann.

Vorzugsweise umfasst der Trockner im Adsorberkanal ein Sensorsystem. Das Sensorsystem kann ein oder mehrere gleichartige oder verschiedene Sensoren umfassen. Vorzugsweise umfasst das Sensorsystem einen Temperatursensor und/oder einen Feuchtigkeitssensor. Das Sensorsystem ist im Allgemeinen in Richtung des Flusses der Prozessluft nach der Adsorbereinheit angeordnet. Erfindungsgemäß kann allerdings in Richtung des Flusses der Prozessluft auch beispielsweise ein Sensor vor und ein Sensor hinter der Adsorbereinheit angeordnet sein. Dies ermöglicht beispielsweise die Ermittlung von räumlichen Gradienten der Temperatur und/oder der Luftfeuchtigkeit.

Mit Hilfe des Sensorsystems kann ermittelt werden, inwieweit die Adsorbereinheit noch zur Aufnahme von Wasser in der Lage ist, d.h. insbesondere, wann vorzugsweise von einer Adsorptionsphase zu einer Desorptionsphase übergegangen werden sollte. Entsprechend ermöglicht das Sensorsystem eine Feststellung darüber, wann sinnvollerweise von einer Desorptionsphase in eine Adsorptionsphase übergegangen werden kann.

Solange die Adsorbereinheit in der Lage ist, der feuchtwarmen Prozessluft Feuchtigkeit zu entziehen, wird relativ trockene Prozessluft die Adsorbereinheit verlassen. Da infolge der Adsorption von Wasser auch Adsorptionswärme erzeugt wird, hat diese relativ trockene Prozessluft zudem eine relativ hohe Temperatur. Ist nun die Aufnahmekapazität der Adsorbereinheit für Wasser erschöpft, wird die Feuchtigkeit der die Adsorbereinheit verlassenden Prozessluft ansteigen. Gleichzeitig findet aufgrund der fehlenden Adsorptionswärme keine Erwärmung der Prozessluft mehr statt. Die Temperatur der die Adsorbereinheit verlassenden Prozessluft wird daher abnehmen.

Die zunehmende Feuchtigkeit und abnehmende Temperatur der die Adsorbereinheit verlassenden Prozessluft kann mit dem Sensorsystem ermittelt und mittels einer Auswerteeinheit ausgewertet werden. Auf diese Weise kann in einem Verfahren zum Betrieb dieses Trockners über eine Steuereinrichtung eine Adsorptionsphase beendet und eine Desorptionsphase eingeleitet werden.

Die Adsorbereinheit umfasst im Allgemeinen ein Adsorbermaterial, das auch als Trocknungsmittel bezeichnet wird. Das Adsorbermaterial ist im Allgemeinen in der Lage, unter Erzeugung von Wärme Wasser reversibel zu adsorbieren. Vorzugsweise umfasst die Adsorbereinheit ein Adsorbermaterial, das ausgewählt ist aus der Gruppe, die aus Zeolith, Aluminiumoxid, Kieselgel und einer beliebigen Mischung hieraus besteht. Das Adsorbermaterial ist vorzugsweise ein Adsorbermaterial auf Basis von Zeolith, insbesondere Zeolith.

Das Adsorbermaterial liegt vorzugsweise in Form von Perlen vor. Eine Perlform der einzelnen Teilchen ermöglicht einen optimalen Durchgang der feuchtwarmen Prozessluft ohne Ausbildung von Kanälen. Hierzu trägt auch eine gleichmäßige Korngrößenverteilung bei hohem Schüttgewicht bei. Außerdem ist bei einer Perlform der einzelnen Teilchen ein Abrieb sehr klein.

Die Auswahl des Adsorbersystems hängt im Allgemeinen von der Durchschnittstemperatur der Prozessluft und von der gewünschten Adsorption von Feuchtigkeit ab.

Der erfindungsgemäße Trockner kann mehrere Adsorberkanäle aufweisen, die jeweils ebenfalls eine Adsorbereinheit und eine Adsorberheizung und ggf. ein Sensorsystem enthalten.

Der Adsorberkanal und der mindestens eine Prozessluftkanal sind vorzugsweise vor dem ersten Wärmetauscher gegeneinander thermisch isoliert, beispielsweise durch Verwendung eines thermisch isolierenden Materials ihrer Wände oder durch Anbringung einer Wärmeisolationsschicht auf ihren Wänden.

Der erste Wärmetauscher umfasst den Adsorberkanal und den mindestens einen Prozessluftteilkanal, so dass Wärme zwischen dem Adsorberkanal und dem mindestens einen Prozessluftteilkanal ausgetauscht werden kann. Der erste Wärmetauscher ist somit als ein Luft-Luft-Wärmetauscher ausgestaltet.

In einer bevorzugten Ausführungsform des Trockners vereinigen sich der Adsorberkanal und der mindestens eine Prozessluftteilkanal zwischen dem ersten Wärmetauscher und der Heizung wieder.

Für die Regenerierung eines Adsorbermaterials, d.h. die Desorption des darin enthaltenen Wassers, ist eine Erwärmung des Adsorbermaterials erforderlich. Hierzu können verschieden Arten von Adsorberheizungen eingesetzt werden, z.B. Wärmestrahler oder elektrische Heizungen. Vorzugsweise wird eine elektrische Adsorberheizung eingesetzt. Die Adsorberheizung ist vorzugsweise in und/oder vor der Adsorbereinheit angeordnet. Eine elektrische Adsorberheizung kann als Rohrheizkörper oder offene Drahtwendel, die in der Adsorbereinheit angeordnet ist, beispielsweise einer Zeolith enthaltenden Patrone, ausgebildet sein. Die Adsorberheizung kann allerdings auch ummantelt als Luftheizung vor der Adsorbereinheit angeordnet sein. Eine offene Drahtwendelheizung dient auch für die Adsorbereinheit als Flusenschutz. Es können auch beide Heizvarianten miteinander kombiniert werden.

Vorzugsweise umfasst der erfindungsgemäße Trockner einen zweiten Wärmetauscher zur Abkühlung der Prozessluft nach Durchgang durch die Trocknungskammer. Der zweite Wärmetauscher kann beispielsweise der Verdampfer einer Wärmepumpe oder ein Luft-Luft-Wärmetauscher sein. Besonders bevorzugt ist der zweite Wärmetauscher ein zweiter Luft-Luft-Wärmetauscher.

Der zweite Luft-Luft-Wärmetauscher funktioniert unter Verwendung von Kühlluft, beispielsweise aus einem Aufstellraum des Trockners, die in einem gesonderten Kühlluftkanal für eine Abkühlung der Prozessluft sorgt. Im Kühlluftkanal ist zur Beförderung der Kühlluft vorzugsweise ein Kühlluftgebläse vorgesehen.

Der zweite Wärmetauscher ist im Prozessluftkanal vorzugsweise zwischen der Trocknungskammer und dem Adsorberkanal angeordnet.

Im zweiten Wärmetauscher findet im Allgemeinen eine erste Abkühlung und Entfeuchtung der feuchtwarmen Prozessluft aus der Trocknungskammer statt.

Beim Betrieb des erfindungsgemäßen Trockners wechseln sich im Allgemeinen Adsorptionsphasen und Desorptionsphasen ab, wobei für die Durchführung einer Desorptionsphase während eines Trocknungsverfahrens die Verwendung von trockener warmer Luft vorteilhaft ist.

In einer bevorzugten Ausführungsform des Trockners ist daher am Eingang des Adsorberkanals eine regelbare vordere Adsorberkanalverschlussvorrichtung angeordnet. Auf diese Weise kann verhindert werden, dass während einer Desorptionsphase feuchte Prozessluft aus der Trocknungskammer in den Adsorberkanal gelangt. Hierbei ist es wiederum bevorzugt, dass am Ausgang des Adsorberkanals eine regelbare hintere Adsorberkanalverschlussvorrichtung angeordnet ist.

Zur besseren Steuerung des Trockners kann zudem vorgesehen sein, dass in dem mindestens einen Prozessluftteilkanal eine regelbare Verschlussvorrichtung angeordnet ist.

Der erfindungsgemäße Trockner kann als reiner Trockner, aber auch als Waschtrockner ausgestaltet sein. Unter einem Waschtrockner wird hierbei ein Kombinationsgerät verstanden, das über eine Waschfunktion zum Waschen von Wäsche und über eine Trocknungsfunktion zum Trocknen von feuchter Wäsche verfügt.

Im erfindungsgemäßen Trockner kann vorteilhaft eine Betriebszustandsanzeige vorhanden sein, welche anzeigt, ob im Trockner gerade ein Adsorptionsverfahren oder ein Desorptionsverfahren durchgeführt wird. Die Betriebszustandsanzeige kann beispielsweise eine Leuchtdiodenanordnung mit Leuchtdioden unterschiedlicher Farbe sein. Erfindungsgemäß kann auch vorgesehen sein, dass ein Adsorptionsmaterial ggf. ausgetauscht werden soll.

Gegenstand der Erfindung ist außerdem ein Verfahren zum Betrieb eines Trockners mit einer Trocknungskammer für zu trocknende Gegenstände, einem Prozessluftkanal, in dem sich eine Heizung zur Erwärmung der Prozessluft, eine Adsorbereinheit, eine Adsorberheizung, ein erster Wärmetauscher, ein Gebläse für die Beförderung der Prozessluft und eine Steuereinrichtung befinden, wobei sich der Prozessluftkanal hinter der Trocknungskammer in einen Adsorberkanal, in dem sich die Adsorbereinheit und die Adsorberheizung befinden, und in mindestens einen Prozessluftteilkanal aufspaltet, und der erste Wärmetauscher den Adsorberkanal und den mindestens einen Prozessluftteilkanal umfasst, so dass Wärme zwischen dem Adsorberkanal und dem mindestens einen Prozessluftteilkanal ausgetauscht werden kann, wobei im Verfahren mindestens einmal
(a) eine Adsorptionsphase, in welcher ein in der Adsorbereinheit (5) befindliches Adsorbermaterial Wasser aufnimmt, und
(b) eine Desorptionsphase, in welcher das vom Adsorbermaterial aufgenommene Wasser desorbiert wird,
durchgeführt werden.

Für den Fall, dass der erfindungsgemäße Trockner mehrere Adsorberkanäle aufweist, die jeweils ebenfalls eine Adsorbereinheit und eine Adsorberheizung und ggf. ein Sensorsystem enthalten, kann das Verfahren so betrieben werden, dass in mehreren Adsorberkanälen gleichzeitig eine Adsorptionsphase oder eine Desorptionsphase durchgeführt werden. Es ist allerdings auch möglich, dass bei Vorhandensein mehrerer Adsorberkanäle in unterschiedlichen Adsorberkanälen gleichzeitig Adsorptionsphasen und Desorptionsphasen durchgeführt werden.

Die mit Feuchtigkeit beladene Prozessluft aus der Trocknungskammer gelangt beim Betrieb des Trockners in der Adsorptionsphase (a) in die Adsorbereinheit, wo die Feuchtigkeit im Allgemeinen von einem Adsorptionsmaterial (Trocknungsmittel) reversibel adsorbiert wird. Am Ausgang des Adsorberkanals (Adsorberkanalausgang) tritt somit trockene Luft aus, die über den Prozessluftkanal, vorzugsweise nach einer Vereinigung mit Prozessluftteilkanälen, und die Heizung wieder in die Trocknungskammer geleitet wird. Die in der Adsorbereinheit aufgrund einer exothermen Adsorptionsreaktion erwärmte Prozessluft kann die aufgenommene Wärme über einen Wärmetausch im ersten Wärmetauscher an die Prozessluft in den Prozessluftteilkanälen abgeben.

Vorzugsweise wird daher in der Adsorptionsphase (a) die durch das Adsorbermaterial hindurchtretende Prozessluft aufgrund einer exothermen Adsorptionsreaktion erwärmt.

Vorzugsweise wird eine Adsorptionsphase (a) solange durchgeführt, bis ein im Adsorberkanal angeordnetes Sensorsystem eine Abnahme der Temperatur der Prozessluft und/oder eine Zunahme der Feuchtigkeit der Prozessluft nach Durchgang durch die Adsorbereinheit feststellt. Ist nämlich die Aufnahmekapazität der Adsorbereinheit und insbesondere eines in der Adsorbereinheit vorhandenen Adsorbermaterials erschöpft, kann kein Wasser mehr in einer exothermen Adsorptionsreaktion aufgenommen werden. Als Folge kann die feuchtwarme Prozessluft weder entfeuchtet noch erwärmt werden. Entsprechend umfasst ein hierzu eingesetztes Sensorsystem einen Temperatursensor und/oder einen Feuchtigkeitssensor.

Bei erschöpfter Aufnahmekapazität für Wasser ist eine Regenerierung des Adsorbers durch eine Desorption des aufgenommenen Wassers erforderlich.

In einer Desorptionsphase (b) wird im Allgemeinen die Adsorberheizung eingeschaltet und das im Adsorbermaterial aufgenommene Wasser desorbiert und im ersten Wärmetauscher kondensiert. Unterhalb des ersten Wärmetauschers ist hierzu im Allgemeinen eine Kondensatwanne vorhanden. Je nach Anordnung der Adsorberheizung in und/oder vor der Adsorbereinheit kann die Desorption über eine direkte Erwärmung des Adsorbermaterials und/oder indirekt über erwärmte Luft stattfinden. Aufgrund des Wärmetausches im ersten Wärmetauscher wird auch in einer Desorptionsphase die Prozessluft in den Prozessluftteilkanälen erwärmt.

Bei Verwendung von Zeolith als Adsorbermaterial wird die Adsorbereinheit vorzugsweise auf eine Temperatur im Bereich von 150 bis 300°C erhitzt.

Das Ausmaß der Kondensation des Wassers aus dem Adsorbermaterial hängt im Allgemeinen von der Temperaturdifferenz im ersten Wärmetauscher und den Strömungsgeschwindigkeiten von Prozessluft und mit Feuchtigkeit angereicherter Luft im Adsorberkanal ab. Für einen effizienten Wärmetausch im ersten Wärmetauscher wird vorzugsweie darauf geachtet, dass die mit Feuchtigkeit angereicherte Luft im Adsorberkanal auf eine Temperatur unterhalb des Taupunktes der Feuchtigkeit abgekühlt wird.

Beim erfindungsgemäßen Verfahren wechseln sich vorzugsweise mehrfach Adsorptionsphasen (a) und Desorptionsphasen (b) ab. Der Übergang zwischen einer Adsorptionsphase (a) und einer Desorptionsphase (b) kann leicht dadurch realisiert werden, dass der Adsorberkanal zu gegebener Zeit für den Zutritt feuchtwarmer Prozessluft aus der Trocknungskammer verschlossen wird und eine Adsorberheizung zur Regenerierung (Desorption) des Adsorbermaterials eingeschaltet wird. Ist die Regenerierung (Desorption) beendet, kann die Desorptionsphase (b) beendet und eine Adsorptionsphase (a) eingeleitet werden, indem die Adsorberheizung im Adsorberkanal ausgeschaltet und der Adsorberkanal wieder für den Zutritt von feuchtwarmer Prozessluft geöffnet wird.

Im Ergebnis wird, z.B. über den Wärmetausch im ersten Wärmetauscher, jeweils eine Vorwärmung der Prozessluft erreicht, so dass die Heizung zur Erwärmung der Prozessluft mit einer geringeren Leistung betrieben werden kann. Je nachdem, ob sich der Trockner in einer Adsorptionsphase (a) oder in einer Desorptionsphase (b) befindet, wird die Anforderung an die Leistung der Heizung unterschiedlich sein.

Der Bedarf an Heizungsleistung wird zwar generell geringer sein, kann jedoch in Abhängigkeit von der vorliegenden Betriebsphase (Adsorptionsphase, Desorptionsphase) variieren. Vorzugsweise wird daher eine Heizung eingesetzt, deren Leistung variiert werden kann, z.B. durch eine stufenweise Auslegung der Heizung. Zur Steuerung der Heizung können auch die Daten aus einem im Adsorberkanal angeordneten Sensorsystem herangezogen werden.

Ist kein Sensorsystem vorhanden, können in der Steuereinrichtung zur Steuerung des Verfahrens Erfahrungswerte für die mögliche oder notwendige Einleitung und Dauer von Adsorptionsphasen und Desorptionsphasen hinterlegt sein.

Im erfindungsgemäßen Verfahren kann ein optional vorhandener zweiter Wärmetauscher zur Steuerung des Verfahrens eingesetzt werden. Der Einsatz eines zweiten Wärmetauschers ist insbesondere dann sinnvoll, wenn im Trockner eine Desorptionsphase durchgeführt wird.

Vorzugsweise wird daher bei Verwendung eines zweiten Luft-Luft-Wärmetauschers ein Kühlluftgebläse angeschaltet, wenn im Trockner eine Desorptionsphase durchgeführt wird.

Das erfindungsgemäß vorzugsweise eingesetzte Adsorbermaterial ist im Allgemeinen hygroskopisch, so dass es in Betriebspausen des Trockners zu einer mindestens teilweisen Beladung des Adsorbermaterials mit Wasser kommen kann. Dies kann zum großen Teil vermieden werden, wenn die Adsorbereinheit isoliert wird, beispielsweise durch Verschließen des Adsorberkanals bei Vorhandensein einer regelbaren vorderen und hinteren Adsorberkanalverschlussvorrichtung.

In einer bevorzugten Ausführungsform des erfindungsgemäßen Verfahrens wird allerdings mit einer Desorptionsphase begonnen.

Die Erfindung hat den Vorteil, dass bei einem Trockner die Leistung der Heizung für die Erwärmung der Prozessluft reduziert werden kann. Außerdem ist eine Beschleunigung der Trocknung von Wäsche möglich. Insgesamt kann ein Trockner mit erhöhter Energieeffizienz betrieben werden. Der Trockner ermöglicht einen verbesserten kontinuierlichen Betrieb mit einem Adsorptionsmaterial.

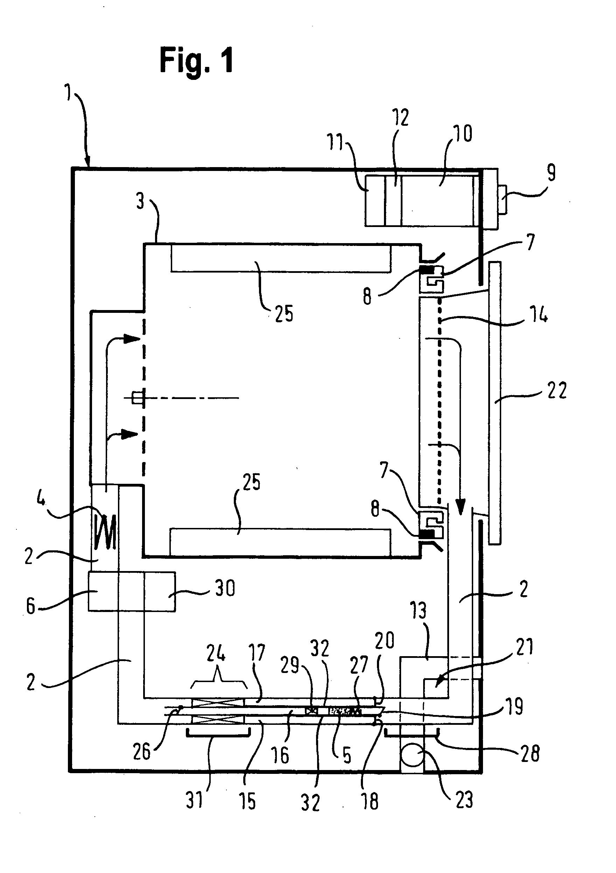

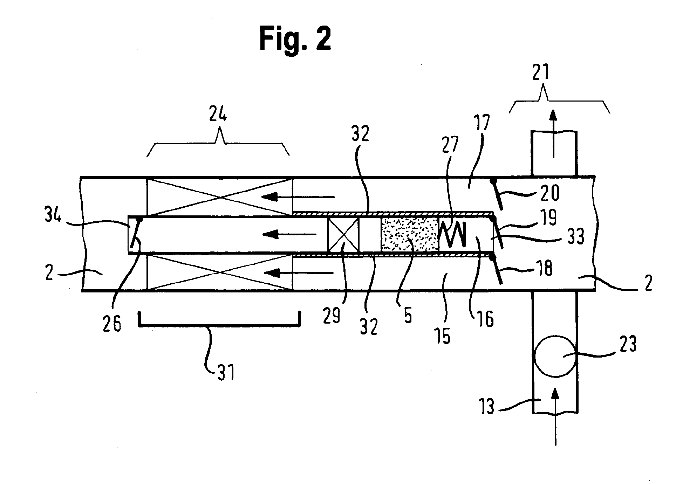

Weitere Einzelheiten der Erfindung ergeben sich aus der nachfolgenden Beschreibung eines nicht einschränkenden Ausführungsbeispiels für den erfindungsgemäßen Trockner, in dem ein erfindungsgemäßes Verfahren zu seinem Betrieb durchgeführt werden kann. Dabei wird Bezug auf die Figuren 1 und 2 genommen. Es zeigen:
Figur 1 einen senkrechten Schnitt durch einen Trockner, der als Kondensationstrockner ausgestaltet ist,
Figur 2 einen senkrechten Schnitt durch den vergrößerten wesentlichen Teil des Trockners von Figur 1.

In den Figuren 1 und 2 zeigen die Pfeile die Fließrichtung der Prozessluft an.

Der in Figur 1 dargestellte Trockner 1 weist eine um eine horizontale Achse drehbare Trommel als Trocknungskammer 3 auf, innerhalb welcher Mitnehmer 25 zur Bewegung von Wäsche während einer Trommeldrehung befestigt sind. Die Prozessluft wird im Prozessluftkanal 2 mittels eines Gebläses 6 über einen zweiten Luft-Luft-Wärmetauscher 21, einen ersten Wärmetauscher 24 und eine elektrische Heizung 4 durch die Trommel 3 geführt. Dabei wird von der elektrischen Heizung 4 erwärmte Luft von hinten, d.h. von der einer Tür 22 gegenüber liegenden Seite der Trommel 3, durch deren gelochten Boden in die Trommel 3 geleitet.

Nach Austritt aus der Trommel 3 strömt die mit Feuchtigkeit beladene Prozessluft durch die Befüllöffnung der Trommel 3 zu einem Flusensieb 14 innerhalb einer die Befüllöffnung verschließenden Tür 22. Anschließend wird der Prozessluftstrom in der Tür 22 nach unten in den Prozessluftkanal 2 umgelenkt und zum zweiten Luft-Luft-Wärmetauscher 21 geleitet, durch den Kühlluft in einem Kühlluftkanal 13 mittels eines Kühlluftgebläses 23 befördert werden kann. Im zweiten Luft-Luft-Wärmetauscher 21 kondensiert infolge Abkühlung ein mehr oder weniger großer Teil der von der Prozessluft aus den Wäschestücken aufgenommenen Feuchtigkeit und wird in einer Kondensatwanne 28 aufgefangen.

Anschließend an den zweiten Luft-Luft-Wärmetauscher 21 spaltet sich der Prozessluftkanal 2 in einen Adsorberkanal 16, einen ersten Prozessluftteilkanal 15 und einen zweiten Prozessluftteilkanal 17. Im Adsorberkanal 16 befinden sich eine Adsorbereinheit 5 mit einem Adsorbermaterial, eine Adsorberheizung 27 und ein Sensorsystem 29.

Am Eingang des Adsorberkanals 16 befindet sich eine vordere regelbare Adsorberkanalverschlussvorrichtung 19, mit welcher der Adsorberkanal 16 für die Durchführung einer Desorptionsphase verschlossen werden kann, so dass keine feuchtwarme Prozessluft in den Adsorberkanal 16 gelangt. Bei der hier gezeigten Ausführungsform befinden sich im ersten Prozessluftteilkanal 15 eine erste regelbare Prozessluftteilkanalverschlussvorrichtung 18 und im zweiten Prozessluftteilkanal 17 eine zweite regelbare Prozessluftteilkanalverschlussvorrichtung 19.

Die vordere regelbare Adsorberkanalverschlussvorrichtung 19 sowie die regelbaren Prozessluftteilkanalverschlussvorrichtungen 18 und 20 ermöglichen es, die Luftströme im Adsorberkanal 16 und im ersten sowie zweiten Prozessluftteilkanal 15 und 17 so zu steuern, dass im ersten Wärmetauscher 24 ein optimaler Wärmetausch stattfinden kann. Optimal bedeutet hier insbesondere, dass es zu einer Kondensation von Feuchtigkeit aus der feuchten Luft im Adsorberkanal 16 kommen kann. Diese als Kondensat anfallende Feuchtigkeit wird in einer Kondensatwanne 31 aufgefangen.

Hinter der vorderen regelbaren Absorberkanalverschlusseinrichtung 19 ist eine Adsorberheizung 27 angeordnet, die sich teilweise vor und teilweise in der Adsorbereinheit 5 befindet. Die Adsorberheizung 27 ermöglicht in einer Desorptionsphase die Aufheizung der Adsorbereinheit 5, insbesondere die Aufheizung eines in der Adsorbereinheit 5 enthaltenen Adsorbermaterials, das hier Zeolith ist. Bei der hier gezeigten Ausführungsform heizt die Adsorberheizung 27 sowohl direkt das Adsorbermaterial als auch indirekt, indem zunächst die vor der Adsorbereinheit 5 befindliche Luft erhitzt wird.

Der Adsorberkanal 16 und die beiden Prozessluftteilkanäle 15 und 17 sind über eine Wärmeisolationsschicht 32 voneinander thermisch isoliert. Die Wärmeisolationsschicht 32 erstreckt sich hier entlang des Adsorberkanals 16 zwischen dem Eingang des Adsorberkanals 16 und dem Eingang des ersten Wärmetauschers 24. Hierdurch ist es möglich, den Wärmetausch zwischen Adsorberkanal 16 und den beiden Prozessluftteilkanälen 15 und 17 auf den ersten Wärmetauscher 24 zu beschränken.

Bei der Durchführung eines erfindungsgemäßen Verfahrens wird zunächst vorzugsweise eine Desorptionsphase durchgeführt. Da das Adsorbermaterial Zeolith sehr hygroskopisch ist, zieht es zwischen zwei Trocknungsprozessen Feuchtigkeit an, so dass sich dessen Regenerierung vor einer erneuten Benutzung nach einer Betriebspause empfiehlt.

In einer Desorptionsphase wird die regelbare vordere Adsorberkanalverschlussvorrichtung 19 verschlossen und die Adsorberheizung 27 angeschaltet. Vorzugsweise wird auch die regelbare hintere Adsorberkanalverschlussvorrichtung 26 geschlossen, so dass der Adsorberkanal 16 auf beiden Seiten geschlossen ist. Die Adsorberheizung 27 heizt das hier verwendete Adsorbermaterial Zeolith besonders bevorzugt auf eine Temperatur im Bereich von 200 bis 300°C auf. Die dadurch aus dem Zeolith freigesetzte Feuchtigkeit gelangt in den ersten Wärmetauscher 24, wo sie sich als Kondensat niederschlägt, das in einer Kondensatwanne 31 aufgefangen werden kann. Im ersten Wärmetauscher 24 wird die Prozessluft vorgeheizt, so dass die elektrische Heizung 4 mit geringerer Leistung betrieben werden kann.

Während der Desorptionsphase misst das Sensorsystem 29, das hier zwischen der Adsorbereinheit 5 und dem ersten Wärmetauscher 24 angeordnet ist und aus einem Temperatursensor und einem Feuchtigkeitssensor besteht, Temperatur und Feuchtigkeit der Luft hinter der Adsorbereinheit 5. Ein Ende der Desorptionsphase zeigt sich an einer Abnahme der Feuchtigkeit und einer Zunahme der Temperatur. Wenn die Abnahme der Feuchtigkeit und/oder die Zunahme der Temperatur bestimmte in der Steuereinrichtung 10 vorgegebene Werte erreichen oder überschreiten, wird die Desorptionsphase beendet. Hierzu wird die Adsorberheizung 27 abgestellt und die vordere und die hintere regelbare Adsorberkanalverschlussvorrichtung 19 und 26 werden geöffnet.

In der sich anschließenden Adsorptionsphase gelangt die noch feuchtwarme Prozessluft vom zweiten Luft-Luft-Wärmetauscher 21 teils in den Adsorberkanal 16 und teils in den ersten Prozessluftteilkanal 15 und in den zweiten Prozessluftteilkanal 17. Die jeweiligen Anteile können mittels der regelbaren vorderen Adsorberkanalverschlussvorrichtung 19 sowie den regelbaren Prozessluftteilkanalverschlussvorrichtungen 18 und 20 eingestellt werden.

Im Adsorberkanal 16 gelangt die feuchtwarme Prozessluft in der Adsorbereinheit 5 an das Adsorbermaterial Zeolith, welches unter Erwärmung der feuchtwarmen Prozessluft Feuchtigkeit entzieht und diese gleichzeitig weiter erwärmt. Im ersten Wärmetauscher 24 kann die auf diese Weise im Adsorberkanal 16 erwärmte Prozessluft die Prozessluft in den Prozessluftteilkanälen 15 und 17 erwärmen. Es ergibt sich auch hier somit eine Vorheizung der Prozessluft, so dass eine geringere Leistung der elektrischen Heizung 4 genügt. Im ersten Wärmetauscher 24 ggf. noch anfallendes Kondensat wird in der Kondensatwanne 31 aufgefangen.

Die Adsorptionsphase (a) wird solange durchgeführt, bis das im Adsorberkanal 16 angeordnete Sensorsystem 29 als Folge der vollständigen Beladung des Adsorbermaterials mit Feuchtigkeit eine Abnahme der Temperatur der Prozessluft und/oder eine Zunahme der Feuchtigkeit der Prozessluft nach Durchgang durch die Adsorbereinheit 5 feststellt.

Es sei hier noch darauf hingewiesen, dass der zweite Luft-Luft-Wärmetauscher 21 nicht unbedingt in Betrieb genommen werden muss. Insbesondere in einer Adsorptionsphase kann die Adsorbereinheit 5 eine effiziente Trocknung der feuchtwarmen Prozessluft aus der Trocknungskammer 3 bewirken. Dagegen kann es sinnvoll sein, den zweiten Luft-Luft-Wärmetauscher 21 zumindest in einer Desorptionsphase zu betreiben, da hier die Adsorbereinheit 5 nicht zu einer Trocknung der feuchtwarmen Prozessluft beitragen kann.

Eine Auswerteeinheit 12 wertet die Signale des Sensorsystems 29 aus, so dass die Steuereinrichtung 12 die Adsorptionsphasen und Desorptionsphasen in Hinblick auf Ausgestaltung, Dauer und Anzahl steuern kann. Eine Betriebszustandsanzeige 11, z.B. eine Leuchtdiodenanordnung, zeigt an, ob sich der Trockner in einer Adsorptionsphase oder in einer Desorptionsphase befindet.

Die Trommel 3 wird in der in Fig. 1 gezeigten Ausführungsform am hinteren Boden mittels eines Drehlagers und vorne mittels eines Lagerschildes 7 gelagert, wobei die Trommel 3 mit einer Krempe auf einem Gleitstreifen 8 am Lagerschild 7 aufliegt und so am vorderen Ende gehalten wird. Die Steuerung des Trockners erfolgt über eine Steuereinrichtung 10, die vom Benutzer über eine Bedieneinheit 9 geregelt werden kann.

Bei der in Figur 1 gezeigten Ausführungsform werden das Gebläse 6 und die Trommel 3 durch den Motor 30 angetrieben.

Figur 2 zeigt einen senkrechten Schnitt durch den vergrößerten wesentlichen Teil des Trockners von Figur 1, wobei dieser Teil vom ersten Wärmetauscher 24 bis zum zweiten Luft-Luft-Wärmetauscher 21 reicht.

Neben dem zweiten Luft-Luft-Wärmetauscher 21 spaltet sich der Prozessluftkanal 2 in einen Adsorberkanal 16, einen ersten Prozessluftteilkanal 15 und einen zweiten Prozessluftteilkanal 17. Im Adsorberkanal 16 befinden sich eine Adsorbereinheit 5 mit einem Adsorbermaterial, eine Adsorberheizung 27 und ein Sensorsystem 29.

Am Eingang des Adsorberkanals 16 (Adsorberkanaleingang 33) befindet sich eine regelbare vordere Adsorberkanalverschlussvorrichtung 19, mit welcher der Adsorberkanal 16 für die Durchführung einer Desorptionsphase verschlossen werden kann, so dass keine feuchtwarme Prozessluft in den Adsorberkanal 16 gelangt. Bei der hier gezeigten Ausführungsform befinden sich im ersten Prozessluftteilkanal 15 eine erste regelbare Prozessluftteilkanalverschlussvorrichtung 18 und im zweiten Prozessluftteilkanal 17 eine zweite regelbare Prozessluftteilkanalverschlussvorrichtung 20.

Die regelbare vordere Adsorberkanalverschlussvorrichtung 19 sowie die regelbaren Prozessluftteilkanalverschlussvorrichtungen 18 und 20 ermöglichen es, die Luftströme im Adsorberkanal 16 und im ersten sowie zweiten Prozessluftteilkanal 15 und 17 so zu steuern, dass im ersten Wärmetauscher 24 ein optimaler Wärmetausch stattfinden kann. Optimal bedeutet hier insbesondere, dass es zu einer Kondensation von Feuchtigkeit aus der feuchten Luft im Adsorberkanal 16 kommen kann. Diese als Kondensat anfallende Feuchtigkeit wird in einer Kondensatwanne 31 aufgefangen.

Hinter der regelbaren vorderen Adsorberkanalverschlussvorrichtung 19 ist eine Adsorberheizung 27 angeordnet, die sich teilweise vor und teilweise in der Adsorbereinheit 5 befindet. Die Adsorberheizung 27 ermöglicht in einer Desorptionsphase die Aufheizung der Adsorbereinheit 5, insbesondere die Aufheizung des in der Adsorbereinheit 5 enthaltenen Adsorbermaterials Zeolith. Die Adsorberheizung 27 heizt bei dieser Ausführungsform sowohl direkt das Adsorbermaterial als auch indirekt, indem zunächst die vor der Adsorbereinheit 5 befindliche Luft erhitzt wird.

Der Adsorberkanal 16 und die beiden Prozessluftteilkanäle 15 und 17 sind vor dem ersten Wärmetauscher 24 mittels einer Wärmeisolationsschicht 32 voneinander thermisch isoliert. Die Wärmeisolationsschicht 32 erstreckt sich hier entlang des Adsorberkanals 16 zwischen dem Eingang des Adsorberkanals 16 und dem Eingang des ersten Wärmetauschers 24. Hierdurch ist es möglich, den Wärmetausch zwischen Adsorberkanal 16 und den beiden Prozessluftteilkanälen 15 und 17 auf den Bereich im ersten Wärmetauscher 24 zu beschränken. Am hinteren Ende von Adsorberkanal 16 ist am Adsorberkanalausgang 34 eine hintere regelbare Adsorberkanalverschlussvorrichtung 26 angeordnet, so dass der Adsorberkanal 16 vollständig geschlossen werden kann.

### Bezugszeichenliste

- 1: Trockner
- 2: Prozessluftkanal
- 3: Trocknungskammer
- 4: Elektrische Heizung
- 5: Adsorbereinheit
- 6: Gebläse
- 7: Lagerschild
- 8: Gleitstreifen
- 9: Bedieneinheit
- 10: Steuereinrichtung
- 11: Betriebszustandsanzeige
- 12: Auswerteeinheit
- 13: Kühlluftkanal
- 14: Flusensieb
- 15: Erster Prozesslufteilkanal
- 16: Adsorberkanal
- 17: Zweiter Prozessluftteilkanal
- 18: Erste regelbare Verschlussvorrichtung im ersten Prozessluftteilkanal
- 19: Regelbare vordere Adsorberkanalverschlussvorrichtung
- 20: Zweite regelbare Verschlussvorrichtung im zweiten Prozessluftteilkanal
- 21: Zweiter Wärmetauscher; Luft-Luft-Wärmetauscher
- 22: Tür
- 23: Kühlluftgebläse
- 24: Erster Wärmetauscher
- 25: Mitnehmer
- 26: Regelbare hintere Adsorberkanalverschlussvorrichtung
- 27: Adsorberheizung
- 28: Kondensatwanne
- 29: Sensorsystem
- 30: Motor
- 31: Kondensatwanne
- 32: Wärmeisolationsschicht
- 33: Adsorberkanaleingang
- 34: Adsorberkanalausgang

## Patentansprüche

1. Trockner (1) mit einer Trocknungskammer (3) für zu trocknende Gegenstände, einem Prozessluftkanal (2), in dem sich eine Heizung (4) zur Erwärmung der Prozessluft, eine Adsorbereinheit (5), eine Adsorberheizung (27), ein erster Wärmetauscher (24), ein Gebläse (6) für die Beförderung der Prozessluft und eine Steuereinrichtung (10) befinden, **dadurch gekennzeichnet, dass** sich der Prozessluftkanal (2) hinter der Trocknungskammer (3) in einen Adsorberkanal (16), in dem sich die Adsorbereinheit (5) und die Adsorberheizung (27) befinden, und in mindestens einen Prozessluftteilkanal (15,17) aufspaltet, und der erste Wärmetauscher (24) den Adsorberkanal (16) und den mindestens einen Prozessluftteilkanal (15,17) umfasst, so dass Wärme zwischen dem Adsorberkanal (16) und dem mindestens einen Prozessluftteilkanal (15, 17) ausgetauscht werden kann.

2. Trockner (1) nach Anspruch 1, **dadurch gekennzeichnet, dass** er im Adsorberkanal (16) ein Sensorsystem (29) umfasst.

3. Trockner (1) nach Anspruch 2, **dadurch gekennzeichnet, dass** das Sensorsystem (29) einen Temperatursensor und/oder einen Feuchtigkeitssensor umfasst.

4. Trockner (1) nach einem der Ansprüche 1 bis 3, **dadurch gekennzeichnet, dass** die Adsorbereinheit ein Adsorbermaterial umfasst, dass ausgewählt ist aus der Gruppe, die aus Zeolith, Aluminiumoxid, Kieselgel und einer beliebigen Mischung hieraus besteht.

5. Trockner (1) nach Anspruch 4, **dadurch gekennzeichnet, dass** das Adsorbermaterial Zeolith ist.

6. Trockner (1) nach einem der Ansprüche 1 bis 5, **dadurch gekennzeichnet, dass** sich der Adsorberkanal (16) und der mindestens eine Prozessluftteilkanal (15,17) zwischen dem ersten Wärmetauscher (24) und der Heizung (4) wieder vereinigen.

7. Trockner (1) nach einem der Ansprüche 1 bis 6, **dadurch gekennzeichnet, dass** die Adsorberheizung (27) in und/oder vor der Adsorbereinheit (5) angeordnet ist.

8. Trockner (1) nach einem der Ansprüche 1 bis 7, **dadurch gekennzeichnet, dass** er einen zweiten Wärmetauscher (21) zur Abkühlung der Prozessluft nach Durchgang durch die Trocknungskammer (3) umfasst.

9. Trockner (1) nach Anspruch 8, **dadurch gekennzeichnet, dass** der zweite Wärmetauscher (21) ein Luft-Luft-Wärmetauscher ist.

10. Trockner (1) nach Anspruch 8 oder 9, **dadurch gekennzeichnet, dass** der zweite Wärmetauscher (21) im Prozessluftkanal (2) zwischen der Trocknungskammer (3) und dem Adsorberkanal (16) angeordnet ist.

11. Trockner (1) nach einem der Ansprüche 1 bis 10, **dadurch gekennzeichnet, dass** sich am Eingang (33) des Adsorberkanals (16) eine regelbare vordere Adsorberkanalverschlussvorrichtung (19) befindet.

12. Trockner (2) nach Anspruch 11, **dadurch gekennzeichnet, dass** am Ausgang (34) des Adsorberkanals (16) eine regelbare hintere Adsorberkanalverschlussvorrichtung (26) angeordnet ist.

13. Verfahren zum Betrieb eines Trockners (1) mit einer Trocknungskammer (3) für zu trocknende Gegenstände, einem Prozessluftkanal (2), in dem sich eine Heizung (4) zur Erwärmung der Prozessluft, eine Adsorbereinheit (5), eine Adsorberheizung (27), ein erster Wärmetauscher (24), ein Gebläse (6) für die Beförderung der Prozessluft und eine Steuereinrichtung (10) befinden, wobei sich der Prozessluftkanal (2) hinter der Trocknungskammer (3) in einen Adsorberkanal (16), in dem sich die Adsorbereinheit (5) und die Adsorberheizung (27) befinden, und in mindestens einen Prozessluftteilkanal (15,17) aufspaltet, und der erste Wärmetauscher (24) den Adsorberkanal (16) und den mindestens einen Prozessluftteilkanal (15,17) umfasst, so dass Wärme zwischen dem Adsorberkanal (16) und dem mindestens einen Prozessluftteilkanal (15, 17) ausgetauscht werden kann,
**dadurch gekennzeichnet, dass** mindestens einmal
(a) eine Adsorptionsphase, in welcher ein in der Adsorbereinheit (5) befindliches Adsorbermaterial Wasser aufnimmt, und
(b) eine Desorptionsphase, in welcher das vom Adsorbermaterial aufgenommene Wasser desorbiert wird,
durchgeführt werden.

14. Verfahren nach Anspruch 13, **dadurch gekennzeichnet, dass** in der Adsorptionsphase (a) die durch das Adsorbermaterial hindurchtretende Prozessluft aufgrund einer exothermen Adsorptionsreaktion erwärmt wird.

15. Verfahren nach Anspruch 13 oder 14, **dadurch gekennzeichnet, dass** die Adsorptionsphase (a) solange durchgeführt wird, bis ein im Adsorberkanal (16) angeordnetes Sensorsystem (29) eine Abnahme der Temperatur der Prozessluft und/oder eine Zunahme der Feuchtigkeit der Prozessluft nach Durchgang durch die Adsorbereinheit (5) feststellt.

16. Verfahren nach einem der Ansprüche 13 bis 15, **dadurch gekennzeichnet, dass** in der Desorptionsphase (b) eine Adsorberheizung (27) eingeschaltet wird und das im Adsorbermaterial aufgenommene Wasser desorbiert und im ersten Wärmetauscher (24) kondensiert wird.

## Claims

1. Dryer (1) with a drying chamber (3) for articles to be dried, a process air channel (2) in which a heater (4) for heating the process air, an adsorber unit (5), a adsorber heater (27), a first heat exchanger (24), a fan (6) for conveying the process air and a control device (10) are located, **characterised in that** the process air channel (2) is divided behind the drying chamber (3) into an adsorber channel (16), in which the adsorber unit (5) and the adsorber heater (27) are located, and at least one process air sub-channel (15, 17), and the first heat exchanger (24) comprises the adsorber channel (16) and the at least one process air sub-channel (15, 17) so that heat can be exchanged between the adsorber channel (16) and the at least one process air sub-channel (15, 17).

2. Dryer (1) according to claim 1, **characterised in that** it comprises a sensor system (29) in the adsorber channel (16).

3. Dryer (1) according to claim 2, **characterised in that** the sensor system (29) comprises a temperature sensor and/or a moisture sensor.

4. Dryer (1) according to any one of claims 1 to 3, **characterised in that** the adsorber unit comprises an adsorber material selected from the group consisting of zeolite, aluminium oxide, silica gel and any mixture thereof.

5. Dryer (1) according to claim 4, **characterised in that** the adsorber material is zeolite.

6. Dryer (1) according to any one of claims 1 to 5, **characterised in that** the adsorber channel (16) and the at least one process air sub-channel (15, 17) recombine between the first heat exchanger (24) and the heater (4).

7. Dryer (1) according to any one of claims 1 to 6, **characterised in that** the adsorber heater (27) is arranged in and/or in front of the adsorber unit (5).

8. Dryer (1) according to any one of claims 1 to 7, **characterised in that** it comprises a second heat exchanger (21) for cooling the process air after passage through the drying chamber (3).

9. Dryer (1) according to claim 8, **characterised in that** the second heat exchanger (21) is an air/air heat exchanger.

10. Dryer (1) according to claim 8 or 9, **characterised in that** the second heat exchanger (21) is arranged in the process air channel (2) between the drying chamber (3) and the adsorber channel (16).

11. Dryer (1) according to any one of claims 1 to 10, **characterised in that** a regulable front adsorber-channel closure device (19) is disposed at the inlet (33) of the adsorber channel (16).

12. Dryer (1) according to claim 11, **characterised in that** a regulable rear adsorber-channel closure deivce (26) is arranged at the outlet (34) of the adsorber channel (16).

13. Method of operating a dryer (1) with a drying chamber (3) for articles to dried, a process air channel (2) in which a heater (4) for heating the process air, an adsorber unit (5), a adsorber heater (27), a first heat exchanger (24), a fan (6) for conveying the process air and a control device (10) are located, wherein the process air channel (2) is divided behind the drying chamber (3) into an adsorber channel (16), in which the adsorber unit (5) and the adsorber heater (27) are located, and at least one process air sub-channel (15, 17), and the first heat exchanger (24) comprises the adsorber channel (16) and the at least one process air sub-channel (15, 17) so that heat can be exchanged between the adsorber channel (16) and the at least one process air sub-channel (15, 17),
**characterised in that** on at least one occasion
(a) an adsorption phase in which an adsorber material takes up water present in the adsorber unit (5) and
(b) a desorption phase in which the water taken up by the adsorber material is desorbed
are carried out.

14. Method according to claim 13, **characterised in that** the process air passing through the adsorber material in the adsorption phase (a) is heated due to an exothermic adsorption reaction.

15. Method according to claim 13 or 14, **characterised in that** the adsorption phase (a) is carried out until a sensor system (29) arranged in the adsorber channel (16) detects a decrease in the temperature of the process air and/or an increase in the moisture of the process air after passage through the adsorber unit (5).

16. Method according to any one of claims 13 to 15, **characterised in that** an adsorber heater (27) is switched on in the desorption phase (b) and the water taken up in the adsorber material is desorbed and condensed in the first heat exchanger (24).

## Revendications

1. Sèche-linge (1) comprenant une chambre de séchage (3) pour des objets à sécher, un canal d'air de procédé (2), dans lequel se trouve un chauffage (4) destiné à chauffer l'air de procédé, une unité formant adsorbeur (5), un chauffage d'adsorbeur (27), un premier échangeur de chaleur (24), une soufflante (6) pour l'acheminement de l'air de procédé et un dispositif de commande (10), **caractérisé en ce que** le canal d'air de procédé (2) se divise derrière la chambre de séchage (3) en un canal d'adsorbeur (16), dans lequel se trouve l'unité formant adsorbeur (5) et le chauffage d'adsorbeur (27), et en au moins un canal partiel d'air de procédé (15, 17), et le premier échangeur de chaleur (24) comprend le canal d'adsorbeur (16) et le au moins un canal partiel d'air de procédé (15, 17) de sorte que de la chaleur peut être échangée entre le canal d'adsorbeur (16) et le au moins un canal partiel d'air de procédé (15, 17).

2. Sèche-linge (1) selon la revendication 1, **caractérisé en ce qu'**il comprend un système de détection (29) dans le canal d'adsorbeur (16).

3. Sèche-linge (1) selon la revendication 2, **caractérisé en ce que** le système de détection (29) comprend un capteur de température et/ou un capteur d'humidité.

4. Sèche-linge (1) selon l'une quelconque des revendications 1 à 3, **caractérisé en ce que** l'unité formant adsorbeur comprend un matériau adsorbant, qui est sélectionné parmi le groupe constitué de zéolithe, oxyde d'aluminium, gel de silice et un mélange quelconque de ceux-ci.

5. Sèche-linge (1) selon la revendication 4, **caractérisé en ce que** le matériau adsorbant est de la zéolithe.

6. Sèche-linge (1) selon l'une quelconque des revendications 1 à 5, **caractérisé en ce que** le canal d'adsorbeur (16) et le au moins un canal partiel d'air de procédé (15, 17) se réunissent à nouveau entre le premier échangeur de chaleur (24) et le chauffage (4).

7. Sèche-linge (1) selon l'une quelconque des revendications 1 à 6, **caractérisé en ce que** le chauffage d'adsorbeur (27) est agencé dans et/ou devant l'unité formant adsorbeur (5).

8. Sèche-linge (1) selon l'une quelconque des revendications 1 à 7, **caractérisé en ce qu'**il comprend un second échangeur de chaleur (21) destiné au refroidissement de l'air de procédé après passage à travers la chambre de séchage (3).

9. Sèche-linge (1) selon la revendication 8, **caractérisé en ce que** le second échangeur de chaleur (21) est un échangeur de chaleur air-air.

10. Sèche-linge (1) selon la revendication 8 ou 9, **caractérisé en ce que** le second échangeur de chaleur (21) est agencé dans le canal d'air de procédé (2) entre la chambre de séchage (3) et le canal d'adsorbeur (16).

11. Sèche-linge (1) selon l'une quelconque des revendications 1 à 10, **caractérisé en ce qu'**un dispositif antérieur réglable (19) de fermeture de canal d'adsorbeur se trouve à l'entrée (33) du canal d'adsorbeur (16).

12. Sèche-linge (2) selon la revendication 11, **caractérisé en ce qu'**un dispositif postérieur réglable (26) de fermeture de canal d'adsorbeur est agencé à la sortie (34) du canal d'adsorbeur (16).

13. Procédé destiné à faire fonctionner un sèche-linge (1) comprenant une chambre de séchage (3) pour des objets à sécher, un canal d'air de procédé (2), dans lequel se trouve un chauffage (4) destiné à chauffer l'air de procédé, une unité formant adsorbeur (5), un chauffage d'adsorbeur (27), un premier échangeur de chaleur (24), une soufflante (16) pour l'acheminement de l'air de procédé et un dispositif de commande (10), le canal d'air de procédé (2) se divisant derrière la chambre de séchage (3) en un canal d'adsorbeur (16), dans lequel se trouve l'unité formant adsorbeur (5) et le chauffage d'adsorbeur (27), et en au moins un canal partiel d'air de procédé (15, 17), et le premier échangeur de chaleur (24) comprend le canal d'adsorbeur (16) et le au moins un canal partiel d'air de procédé (15, 17), de sorte que de la chaleur peut être échangée entre le canal d'adsorbeur (16) et le au moins un canal partiel d'air de procédé (15, 17),
**caractérisé en ce que**
(a) une phase d'adsorption, dans laquelle un matériau adsorbant se trouvant dans l'unité formant adsorbeur (5) retient de l'eau, et
(b) une phase de désorption, dans laquelle l'eau retenue par le matériau adsorbant est désorbée,
sont mises en oeuvre au moins une fois.

14. Procédé selon la revendication 13, **caractérisé en ce que**, dans la phase d'adsorption (a), l'air de procédé traversant le matériau adsorbant est chauffé par suite d'une réaction d'adsorption exothermique.

15. Procédé selon la revendication 13 ou 14, **caractérisé en ce que** la phase d'adsorption (a) est mise en oeuvre jusqu'à ce qu'un système de détection (29) agencé dans le canal d'adsorption (16) constate une diminution de la température de l'air de procédé et/ou une augmentation de l'humidité de l'air de procédé après passage à travers l'unité formant adsorbeur (5).

16. Procédé selon l'une quelconque des revendications 13 à 15, **caractérisé en ce que**, dans la phase de désorption (b), un chauffage d'adsorbeur (27) est mis sous tension et l'eau retenue dans le matériau adsorbant est désorbée et est condensée dans le premier échangeur de chaleur (24).
